# EUROPEAN PATENT APPLICATION

(11) **EP 1 443 762 A2**
(43) Date of publication of application: **04.08.2004**
(21) Application number: 04001611.5
(22) Date of filing: 26.01.2004
(51) Int. Cl.: H04N 7/16, H04N 7/173

(54) **Reception apparatus**

(30) Priority: 31.01.2003 JP 2003024860
(71) Applicant: Kabushiki Kaisha Toshiba, Tokyo (JP)
(72) Inventor: Miyoshi, Eisuke c/o Toshiba Corporation, 1-1 Shibaura 1-chome Minato-ku 105-8001 (JP)
(74) Representative: Henkel, Feiler & Hänzel

(57) **Abstract**

A reception apparatus having its reception operation controlled based on initially recorded reserved information comprises an input section (19) configured to receive reservation information as an input, a recording section (18) configured to record the reservation information inputted by the input section (19), a deciding section (17) configured to decide whether or not any of those reserved information recorded on the recording section (18) conflicts with the reservation information inputted at the input section (19), and a display section (13) configured to display a result of decision by the deciding section.

## Description

The present invention relates to a reception apparatus for receiving, for example, a TV broadcast and so on and, in particular, to an improvement in a function of receiving any scheduled broadcast program on a reserved form.

As well known in the art, the above-mentioned reception apparatus has the so-called reservation reception function under which the reservation information relating to broadcasting channels, their days (week days), their start/end times, and so on, of those scheduled broadcasting programs are initially set to a receiver and, when any set day 'is reached, a corresponding program can be automatically received.

In recent times, much more reservation information can be set to the receiver due to the emergence of a low-cost and large-capacity memory device. For this reason, a conflict is liable to occur among a plurality of reserved information such as setting any programs of two or more different channels to the same time zone on the receiver.

In the existing receiver, if a conflict occurs between any newly inputted reservation information and the already set reserved information, a warning to that effect is simply informed to the user.

The informed user has to re-set the reserved information by, while referring to a list of already set reserved information, searching for any non-conflicting channels, time zones, etc., of any program's involved. It becomes cumbersome to input such reservation information.

JPN PAT APPLN KOKAI PUBLICATION NO. 2002-160256 discloses the concept of recording not only a record-preserved information for use in its inherent record-reservation but,also a cancellation-candidate record-reserved information and, when the inherent record-reserved information is cancelled, performing an automatic record reservation based on the cancellation-candidate record-reserved information.

JPN PAT APPLN-KOKAI PUBLICATION NO. 2002-262189 discloses the concept of, when a starting time of a desirable program is inputted, enabling the user to obtain the start/end time of the program from a list of programs and search for all program information broadcasted at the start/stop time obtained and display time.

No mention is made, in these KOKAI PUBLICATIONS, of any idea of, if any conflict occurs between a plurality of reserved information, searching for any non-conflicting channels, time zones, etc.,' and, by doing so, re-setting the reserved information, that is, alleviating any work load on the user.

The present invention has been achieved with the above situation in view, and the object of the present invention is to provide a reception apparatus which, if any conflict occurs between/among a plurality of reserved information, can display the conflicting reserved information and support the resetting operation of the reserved information by the user.

According to one aspect of the present invention, there is provided a reception apparatus having its reception operation controlled based on initially recorded reserved information comprising: an input section configured to receive reservation information as an input; a recording section configured to record the reservation information inputted by the input section; a deciding section configured to decide whether or not any of those reserved information recorded on the recording section conflicts with the reservation information inputted at the input section; and a display section configured to display a result of decision by the deciding section.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows one embodiment of the present invention and a block diagram used in explaining a television reception apparatus;
FIG. 2 shows a flow chart for explaining a featuring operation of the television reception apparatus of the present embodiment;
FIG. 3 is a view for explaining one practical form of an image screen displayed in the television reception apparatus of the present invention; and
FIG. 4 is a view for explaining another form of an image screen displayed in the television reception apparatus of the present embodiment.

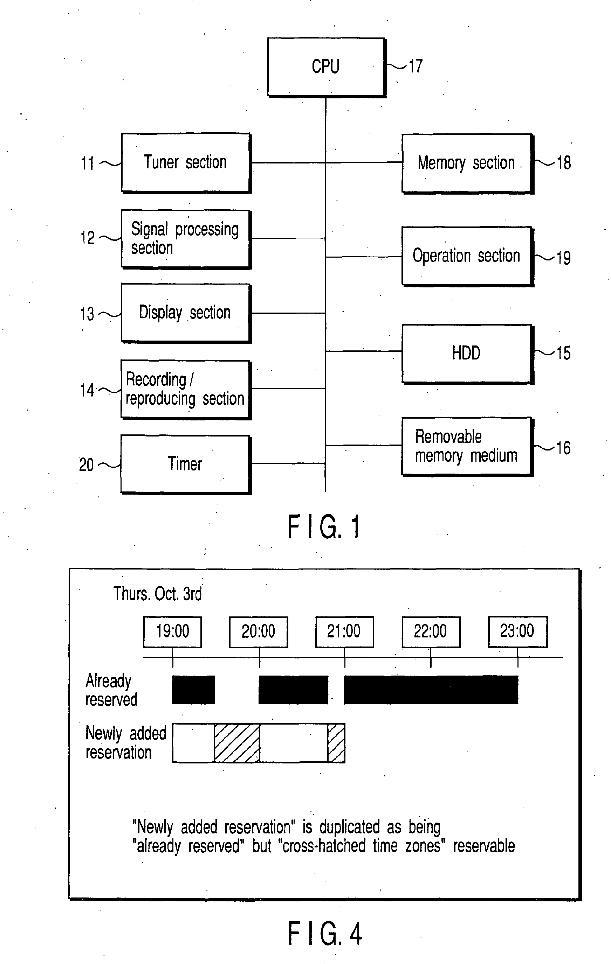

An embodiment of the present invention will be described below with reference to the accompanying drawing. FIG. 1 shows a TV reception apparatus as explained in this embodiment. That is, a reference numeral 11 shows a tuner section configured to select a video signal of a desired channel from a received TV broadcasting signal.

The video signal selected at the tuner section 11 is supplied to a signal processing section 12 and, after being demodulated, fed to a display section 13 where it is displayed as an image. The video signal which is demodulated at the signal processing section 12 is sent to a recording/reproducing section 14 where it is converted to a format for recording.

The video signal thus converted to the recording format can be selectively recorded on a hard disk drive (HDD) 15 as a built-in recording medium or a removable memory medium 16 removably attached to the television reception apparatus.

The video signal recorded in the HDD 15 or the video signal recorded on the removable memory medium 16 can be selectively read out by a recording/reproducing section 14 and converted to a format for reproduction. The converted signal is sent to the display section 13 for display.

The above series of operations are generally controlled by a central processing unit (CPU) 17. That is, the CPU 17 controls each unit/section based on a control program in a memory section 18 so as to reflect operation information from an operation section 19.

The memory section 18 records reserved information which are inputted through the operation section 19. The CPU 17, referring to information such as times of day and days (week days) measured by a timer 20, controls each unit/section so as to allow the reserved information which are recorded on the memory section 18 to be reflected.

Based on the reserved information, each unit/section has its operation controlled, such as an operation of receiving a TV broadcasting and displaying it on the display section 13, an operation of recording a video signal of a received TV broadcasting onto the HDD 15 or removable memory medium 16, an operation of displaying the video signal which is recorded onto the HDD 15 or removable memory medium 16 on the display section 13, etc.

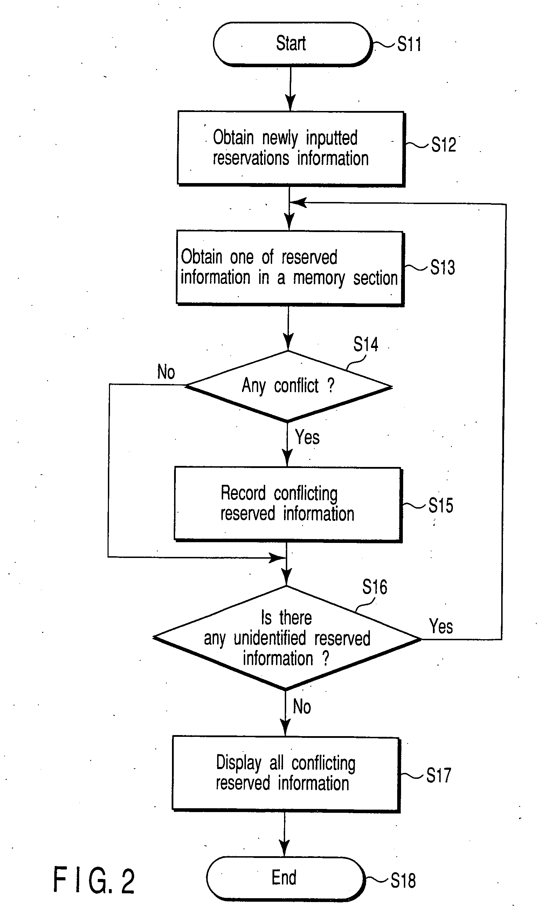

With reference to a flow chart shown in FIG. 2, the TV reception apparatus thus structured will be explained below in connection with its featuring operations. First, at the start of operation (step S11), the CPU 17 obtains new reservation information which is inputted through the operation section 19 at step S12.

Then, at step S13, the CPU 17 obtains, from a plurality of reserved information already recorded in the memory section 18, one reserved information on the basis of a predetermined sequence. After this, at step S14, the CPU 17 decides whether or not there exist any conflicts between the inputted reservation information and any reserved information obtained from the memory section 18.

If it is decided that there exists a conflict (YES), the CPU 17 records an identifier of the reserved information, or its content, obtained from the memory section 18 onto the memory section 18 at step S15.

After step S15 or when it is decided at step S14 that there exists no conflict (NO), the CPU 17 decides whether or not, at step S16, there is any unidentified conflict between the inputted reservation information and those reserved information already recorded on the memory section 18.

If YES, the CPU 17 transfers the process to step S13 and obtains reserved information, in the following sequence, from the reserved information recorded on the memory section 18.

If NO, the CPU 17 displays all those conflicting reserved information on the display section 13 at step S17 and ends the process (step S18).

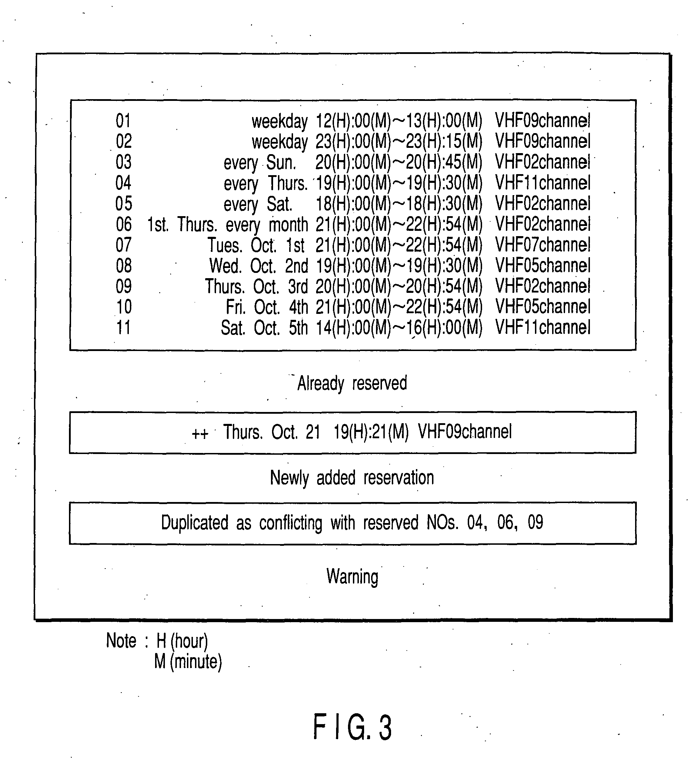

Here, FIG. 3 shows a practical form of an image screen on the display section 13 at step S17. The contents displayed on the image screen are generally classified into "already reserved", "newly added reservation" and "warning".

Of these, the "already reserved" item represents a list of the contents of those reserved information already recorded on the memory section 18 and arranged based a predetermined sequence. In the "already reserved" item, identification numbers 01 to 11 are attached as identifiers to the reserved information and these are automatically added, under the control of the CPU 17, in such a state in which the reserved information are stored in the memory section 18.

The "newly added reservation" item represents the content newly added by the user as being reservation information. The symbol ┌++┘ on the left side of the "newly added reservation" information represents the presence of the "conflict". And the "warning" item represents the identification number showing that the "newly added reservation" information conflicts with any of those "already reserved" items prepared as a list.

According to the embodiment above, if any reservation information is newly inputted, the user can immediately know what action should be taken against any particular reserved information since any conflicting reserved information is displayed out of the reserved information stored in the memory section 18. It is, therefore, possible for the user to support the re-setting operation of any reserved information. 'In this case, any conflicting reserved information can be displayed by the corresponding identifier and, by doing so, it is possible to more save a display area than in the case where the content of the corresponding reserved information is displayed.

Although, in FIG. 3, the displayed items are represented as being classified under the "already reserved", "newly added reservation" and "warning" items, those conflicting reserved information only, that is, the "warning" information only, may be displayed instead.

In FIG. 3, the "warning" item may be deleted from the corresponding display area and, instead, the "already reserved" and "newly added reservation" items may be so displayed that, of a plurality of "already reserved" items, those reserved items conflicting with a "newly added reservation" item can be identified by a different color.

It is further possible to selectively re-set the reserved information under the "already reserved" and "newly added reservation" items on a display screen in FIG. 3 and, by doing so, to support the re-setting operation of the reserved information more readily. If, in this case, any conflict ceases to exist by the re-setting of the reserved information, a warning sign disappears. If, on the other hand, a new conflict appears by the re-setting operation of the reserved information, the identification number of the corresponding reserved information is displayed on a "warning" list.

Further, if any conflict occurs between/among the reserved information, the CPU 17 prepares non-conflicting reserved information candidates and displays them. In this case, the user can select any desired candidate on the display screen and this further supports the re-setting operation of the reserved information.

If the reserved information is to be re-set, the user can select long-duration periodic items, such as "every day", "every week", "every month", etc., items or temporary periodic items such as "this day only" "this week only" etc., items. By doing so, he or she can avoid the reserved information from being changed due to any temporary conflict.

Further, the user can not only display any conflicting reserved information but also display a time zone set for an "already reserved" information and a time zone for a "newly inputted reservation" information on a parallel diagram table as shown, for example, in FIG. 4. In this case, he or she can recognize any particular conflicting time zone and any particular reservable time zone readily upon comparison. That is, it.is possible to further support the re-setting operation of the reserved information by allowing the user to present a condition under which there occurs no conflict with already reserved information.

For example, a pointing device such as a mouse can be utilized on a display screen shown is FIG. 4 in which case any reservation time zone can be re-set by varying the diagram configuration. It is, therefore, possible to achieve the easiness with which the user can re-set the reserved information.

The present invention is not restricted to the above-mentioned embodiment and various changed or modifications of the constituent elements can be made without departing from the essence of the present invention in any practical stage. Further, the present invention can be embodied by properly combining a plurality of constituent elements disclosed in various forms of invention involved. For example, some constituent elements of the embodiment may be eliminated from all the constituent elements shown in the embodiments.

## Claims

1. A reception apparatus having its reception operation controlled based on initially recorded reserved information **characterized by** comprising:
an input section (19) configured to receive reservation information as an input;
a recording section (18) configured to record the reservation information inputted by the input section (19);
a deciding section (17) configured to decide whether or not any of those reserved information recorded on.the recording section (18) conflicts with the reservation information inputted at the input section (19); and
a display section (13) configured to display a result of decision by the deciding section.

2. A reception apparatus according to claim 1, **characterized in that** said display section (13) displays, together with the result of decision by the deciding section (17), the reservation information inputted from said input section (19) and reserved information recorded on said recording section (18).

3. A reception apparatus according to claim 2, **characterized in that** said display section (13) allows the displayed information to be re-set on a display screen.

4. A reception apparatus according to claim 2, **characterized in that** said display section (13) displays the reserved information as a result of decision with an identifier attached thereto.

5. A reception apparatus according to claim 1, **characterized in that** said display section (13) displays the reserved information recorded on said recording section (18) and, of the reserved information displayed, the reserved information as a result of decision by said deciding section is displayed with a different color relative to the remaining reserved information.

6. A reception apparatus according to claim 1, **characterized by** further comprising a control section (17) configured to, when the reservation information conflicts with the reserved information, generate a non-conflicting reservation candidate or candidates for display on said display section (13).

7. A reception apparatus according to claim 6, **characterized in that** said control section (17) allows the displayed reservation candidate or candidates to be selected on a screen of the display section.

8. A reception apparatus according to claim 1, **characterized by** further comprising a control section configured to allow a display, on said display section (13), of a condition under which the reservation information inputted by said input section does not conflict with the reserved information recorded on said recording section (18).

9. A reception apparatus according to claim 1, **characterized by** further comprising a control section (17) configured to allow any.conflicting portion between the reservation information inputted by said input section (19) and the reserved information recorded on said recording section (18) to be displayed on a comparative diagram.

10. A reception apparatus according to claim 1, **characterized in that** said control section (17) allows the reserved information to be re-set by changing a configuration of a diagram on a display screen.
